# EUROPEAN PATENT APPLICATION

(11) **EP 1 055 532 A2**
(43) Date of publication of application: **29.11.2000**
(21) Application number: 00304478.1
(22) Date of filing: 25.05.2000
(51) Int. Cl.: B60F 1/02

(54) **Axle assembly for intermodal vehicles**

(30) Priority: 26.05.1999 GB 9912222
(71) Applicant: Crossley, Martin Charles, Seaslae, Cumbria CA20 1HQ (GB)
(72) Inventor: Crossley, Martin Charles, Seaslae, Cumbria CA20 1HQ (GB)
(74) Representative: Barker, Rosemary Anne

(57) **Abstract**

In order to permit a vehicle to be adapted for road or rail travel, an axle (10) is provided with mounting means, e.g hub rotors(12) and wheel centres (30) whereby road wheels (35) and railway wheels (34) may be interchangeably mounted. Moreover, means, such as a dog clutch (19) mounted between half shafts (15) which are fixed to the mounting means (12, 30) enable the wheels to be connected to prevent relative rotation, for rail travel, or to be disconnected to permit relative rotation, for road travel. Alternative connection/disconnection means may comprise a locking differential in the case of a powered axle.

## Description

This invention relates to a powered or unpowered axle assembly for a vehicle which is equally capable of travelling on road and railway.

Transport of passengers or freight using a combination of road and railway is often known as intermodal transport. When applied to freight several methods have been employed:
- Switching an ISO (International Standards Organisation) container or similar box from road trailer to railway wagon.
- Transporting a lorry trailer on a railway wagon. This is known as piggy back and may also transport the lorry tractor.
- Mounting a lorry trailer on a pair of specially made or adapted railway wagon bogies.

These methods have disadvantages:
Switching a container requires lifting equipment.
Piggy backing a lorry means payload is small compared to total weight so is inefficient.
Specially made railway bogies cannot normally be used with conventional railway wagons.

This invention provides an assembly in which road wheels and railway wheels are interchangeable on the same axle, rather than having separate axles for each wheel type, whereby the two wheels on each axle may be either connected or disconnected to prevent or permit their relative rotation.

When the wheels are connected relative rotation cannot occur, so with the railway wheels in position on the axle the rolling cone effect can be achieved, this being the principle by which the wheelset is steered round a curve in the track.

When the wheels are disconnected relative rotation may occur, so with the road wheels in position on the axle the outer wheel can speed up as it must travel a greater distance in a curve than the inner wheel.

The axle assembly of the invention will incorporate means for removably fixing the road wheels and the railway wheels, as required.

Some embodiments of the axle assembly of the invention may have adjustable spacing of the wheel mounting points to allow use of the axle on different gauges of railway track.

Some embodiments of the axle assembly of the invention may incorporate a propulsion input capable of driving the vehicle both forwards and backwards at the maximum permitted speed of the vehicle.

Driven and undriven versions of the axle assembly may incorporate a steering system for use in road mode.

A braking system is provided in all embodiments of the axle assembly of the invention. Also attachments are provided to suspend the axle from a vehicle body.

Embodiments of the invention are illustrated as follows:-
Figure 1 is a schematic diagram (not to scale) of an unpowered and unsteered embodiment of the axle assembly of the invention. For simplicity one railway wheel and one road wheel are shown on the same drawing (an arrangement unlikely to be used in practice!);
Figure 2 is a fragmentary schematic diagram of a drive input shaft and differential arrangement for a powered embodiment of the axle assembly of the invention. This arrangement replaces the dog clutch of the unpowered axle.
Figure 3 is a schematic diagram of a road steering system, which may be fitted to either a powered or unpowered embodiment of the axle assembly of the invention.

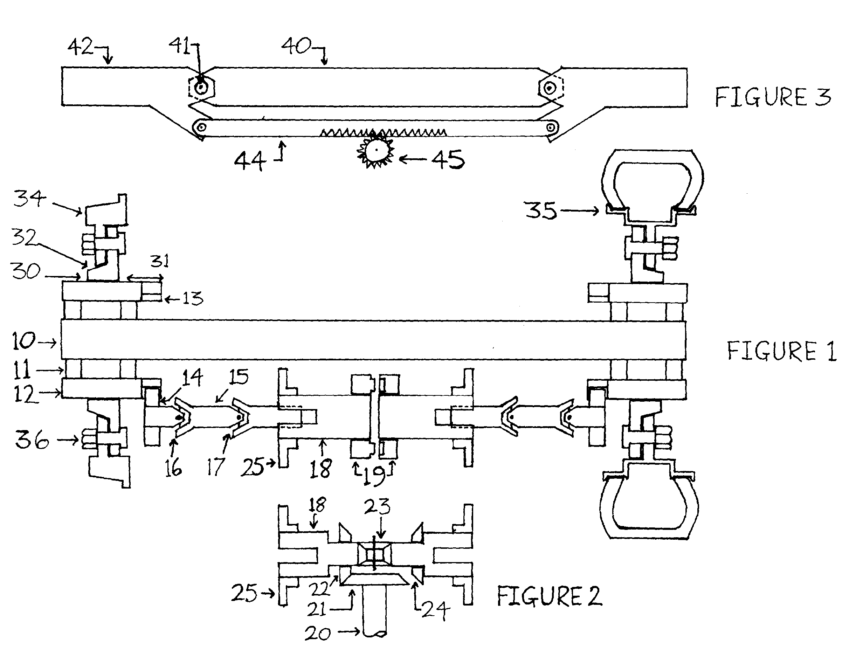

Referring to Fig. 1, this exemplary embodiment comprises on axle beam (10) provided with hub rotors (12) supported on bearings (11).

Each hub rotor (12) has a gear ring (13) mounted on its inner end.

Gear pinions (14), are fitted to the outer ends of respective half shafts (15). These gear pinions (14) mesh with the hub rotor gear rings (13).

The half shafts (15) are each provided with one or more flexible joints (16) and (17), e.g. Hookes joints (universal) arranged to give constant velocity. The inner end of each half shaft (15) is provided with external splines which slide within internal splines on a half shaft end cap (18) thereby allowing for adjustment in length of the half shafts (15). The joints (16, 17) and the sliding spline are required to cope with suspension and steering on road and railway.

Brake rotors (25), together with a dog clutch (19) are mounted on the half shaft end cap (18). In practice, the dog clutch (19) and its actuating mechanism are arranged inside a housing (not shown) which is mounted on a vehicle body. The brake rotors (25) are preferably mounted outside the housing for cabling purposes. In operation brake calipers (not shown) will act on these rotors (25) to effect braking of the axle.

In the unpowered axle the two half shafts (15) are connected for railway operation when the dog clutch (19) is engaged. This prevents relative rotation of the wheels on the axle.

In a powered axle, as shown in figure 2 the dog clutch (19) is not used. Instead a drive input shaft (20), fitted with a bevel or hypoid pinion wheel (21) drives onto a bevel or hypoid crown wheel (22) which is attached to the half shafts (15) via the half shaft end caps (18). A locking differential mechanism (23) splits the drive torque between the half shaft end caps (18). This differential (23) is locked for railway use preventing relative rotation of the railway wheels when on the axle. It is unlocked for road use thus permitting relative rotation of the road wheels when on the axle.

A second crown wheel (24) is shown. This is connected to the pinion wheel (21) when the first crown wheel (22) is disconnected. This causes the half shaft end caps (18) to rotate in the opposite direction thereby providing reverse direction of travel for the vehicle.

Brake rotors (25) are still fitted to the half shaft end caps (18) in powered embodiments of the inventive axle assembly.

Wheel centre (30) is mounted on each hub rotor (12). Axial splines with locating pins or wedges (not shown) may be used so that the axial spacing of the centres (30) may be varied, as indicated by arrows (31). This allows the axle assembly to be used on different gauges of railway track. A locating taper (32) on each wheel centre (30) serves to locate either a railway wheel (34) or a road wheel (35). Each wheel type is held onto the respective centre (30) by the same type of fastening, namely a stud and nut arrangement as shown at (36). This may also include a spring clip (not shown) to prevent the nuts working loose through vibration.

Figure 3 shows the arrangement of a road steering system which could be fitted to either the powered or unpowered axle assembly. It comprises a shorter axle (40) fitted with king pins (41) at each end to which are attached respective stub axles (42). A steering rack (44) is attached between the pair or stub axles (42) and is operated by a pinion (45). The hub rotors in this embodiment are mounted onto the respective stub axles (42), so the arrangement shown in Fig. 3 replaces the axle beam (10) from the Fig. 1 embodiment. In other respects the assembly is the same as in Fig. 1.

The arrangement shown in Fig. 3 is essentially the same as that normally used on lorries but the requirement here is the need to lock the steering in the straight ahead position when in rail mode otherwise the rolling cone effect would not be achieved.

## Claims

1. An axle assembly for an intermodal vehicle comprising an axle, mounting means whereby road wheels or railway wheels may be interchangeably mounted, upon said axle, and means whereby the wheels mounted on the axle may be either connected or disconnected to prevent or permit their relative rotation, respectively.

2. An axle assembly according to claim 1 wherein the mounting means comprise hub rotors mounted on the axle and wheel centres mounted on the hub rotors.

3. An axle assembly according to claim 2 wherein the wheel centres include a taper portion.

4. An axle assembly according to claim 2 or 3 wherein the wheel centres are mounted upon the hub rotors in such a manner as to be axially adjustable in position.

5. An axle assembly according to any preceding claim wherein the means for connecting and disconnecting the wheels on the axle comprises a dog clutch mounted between respective half shafts which are connected by gearing to the mounting means.

6. An axle assembly according to any of claims 1 to 4 wherein the means for connecting and disconnecting the wheels on the axle comprises a locking differential mounted between respective half shafts which are connected by gearing to the mounting means.

7. An axle assembly according to claim 6 incorporating a drive input connected to the locking differential by a set of bevel gears.

8. An axle assembly according to claim 7 wherein the bevel gears are arranged to permit reverse drive of the axle.

9. An axle assembly according to any preceding claim incorporating brake means.

10. An axle assembly according to any preceding claim incorporating a mechanism for steering the wheels when disconnected
